(19) Europäisches Patentamt / European Patent Office / Office européen des brevets

(11) **EP 4 644 746 A1**

(12) **EUROPEAN PATENT APPLICATION**
published in accordance with Art. 153(4) EPC

(43) Date of publication:
**05.11.2025 Bulletin 2025/45**

(21) Application number: 23909981.5

(22) Date of filing: **05.12.2023**

(51) International Patent Classification (IPC):
**F16K 31/06** *(2006.01)*    **F16K 1/32** *(2006.01)*
**F16K 1/36** *(2006.01)*    **F16K 47/02** *(2006.01)*
**F16K 47/08** *(2006.01)*

(52) Cooperative Patent Classification (CPC):
Y02B 30/70

(86) International application number:
**PCT/CN2023/136352**

(87) International publication number:
**WO 2024/140051 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 CN 202211678828**

(71) Applicant: **United Automotive Electronic Systems Co., Ltd.**
**Pudong New Area**
**Shanghai 201206 (CN)**

(72) Inventors:
• **WU, Zhongyu**
  **Shanghai 201206 (CN)**

• **LI, Lingmin**
  **Shanghai 201206 (CN)**
• **YIN, Yifeng**
  **Shanghai 201206 (CN)**
• **ZHAI, Liang**
  **Shanghai 201206 (CN)**
• **CHEN, Liang**
  **Shanghai 201206 (CN)**
• **WANG, Zhiliang**
  **Shanghai 201206 (CN)**
• **QI, Wei**
  **Shanghai 201206 (CN)**

(74) Representative: **Pohlman, Sandra M.**
**df-mp Patentanwälte Rechtsanwälte PartG mbB**
**Theatinerstraße 16**
**80333 München (DE)**

(54) **ELECTROMAGNETIC ELECTRONIC EXPANSION VALVE, THERMAL MANAGEMENT SYSTEM AND VEHICLE**

(57) An electromagnetic electronic expansion valve (EEV), a thermal management system and a vehicle are provided. The electromagnetic EEV includes a housing (200), an iron core (300), a reset spring (400), a coil assembly (800), an armature assembly (500), at least one throttling channel (501) and a valve body (600) defining a first channel (601) and a second channel (602). A valve seat (603) is provided in the second channel (602). The iron core (300), the reset spring (400) and the armature assembly (500) are disposed in the housing (200) sequentially from the top downwards, and the reset spring (400) abuts, at opposite ends thereof, against the iron core (300) and the armature assembly (500). The coil assembly (800) is disposed over the housing (200), and when it is not energized, the iron core (300), the armature assembly (500) and the housing (200) together form an accommodating cavity (201). The throttling channel (501) is in communication with the first channel (601) and the accommodating cavity (201). The armature assembly (500) is movably coupled to the valve seat (603).

Fig. 3

## Description

**TECHNICAL FIELD**

The present invention relates to the field of thermal management systems, and particularly to an electromagnetic electronic expansion valve (EEV), a thermal management system and a vehicle.

**BACKGROUND**

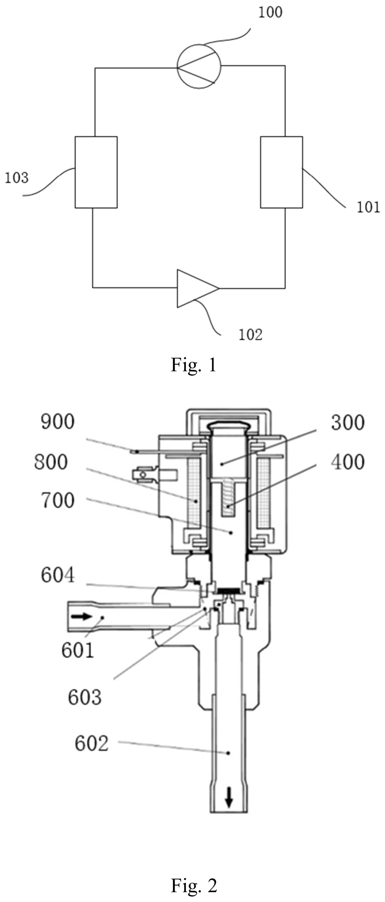

Electromagnetic electronic expansion valves (EEVs) are critical components in automotive thermal management systems. A refrigeration cycle in the simplest form consists of four major components. Particular reference is made to Fig. 1, a schematic diagram showing the structure of a simple refrigeration cycle. As can be seen from Fig. 1, first of all, a refrigerant in the refrigeration circuit passes through a compressor 100, which compresses the refrigerant into a high-temperature, high-pressure gaseous phase. The refrigerant then passes through a condenser 103, where it is condensed and gives up the heat that it carries. As the heat is removed, the liquid experiences a temperature decrease and becomes a medium-temperature, high-pressure refrigerant, which then passes through a throttling orifice in an expansion valve 102. The passage through the throttling orifice creates a throttling effect, which leads to a sudden volume expansion, causing a sharp drop in both pressure and temperature. As a result, the refrigerant is transformed into a low-temperature, low-pressure gas or gas-liquid mixture. Finally, it absorbs heat from the surrounding environment in an egasator 101, thus cooling the environment and lowering its temperature.

The vigorous development of new energy vehicles (NEV), especially all-electric vehicles, has expanded the application scope of automotive thermal management systems from traditional engines and passenger compartments also to battery modules, electronic control systems and other key components for NEVs. The traditional thermal expansion valves have failed to meet the requirements of NEVs for accurate control of thermal management systems. Existing electromagnetic EEVs provide throttling and expansion by means of opening and closing of a valve plug under the control of PWM waves. They offer a variety of advantages including accurate control, fast response and good sealing properties. Particular reference is made to Fig. 2, a schematic diagram showing the structure of an electromagnetic EEV. As can be seen from Fig. 2, the electromagnetic EEV is composed essentially of a coil pin 900, an electromagnetic coil 800, an iron core, a reset spring, an armature 700, a valve stem, a valve seat and the like. The electromagnetic coil 800 is energized by a voltage signal received at the coil pin 900 from a controller to produce a magnetic field, which creates an electromagnetic force on the armature 700, causing it to move upwards to open the valve plug 604. Consequently, a refrigerant passes through a throttling orifice in the valve seat and expands due to the resulting throttling effect. The magnetic field disappears when the coil is no longer energized, and the armature 700 accordingly falls under the action of the reset spring, closing the valve plug 604. The electromagnetic EEV can be opened and closed at a frequency controlled by PWM waves, and a flow rate of the refrigerant through the valve plug 604 can be adjusted by modulating the pulse width of the waves.

At present, electromagnetic EEVs are used mainly in thermal management systems for industrial applications such as cold storages and freezers. This is because such applications typically feature large compartments and heat dissipation spaces, as well as relatively low power consumption, system noise and service life requirements on thermal management systems.

However, passenger NEVs (including all-electric, plug-in hybrid, and extended-range ones) are more demanding for accurate control and fast dynamic response of thermal management systems used herein, despite their tight spaces and the currently popular active grille shutter (AGS) design. This design is not favorable to the heat dissipation efficiency of an associated electromagnetic EEV, because it tends to cause rises in the valve's coil temperature, which would in turn lead to increases in coil resistance, input power for driving the coil and the system's power consumption. In addition, higher coil temperatures can accelerate aging of the coil material, shortening the service life of the electromagnetic EEV.

Therefore, there is an increasingly urgent need in the art for novel electromagnetic EEV, which overcomes the disadvantages of the prior art as discussed above.

**SUMMARY**

It is an object of the present invention to provide an electromagnetic electronic expansion valve (EEV), a thermal management system and a vehicle, which overcome problems associated with the prior art, including increased power consumption and a shorter service life of the conventional electromagnetic EEVs resulting from temperature rises during operation and significant wear and noise of an armature assembly and an iron core therein during operation.

To this end, the present invention provides an electromagnetic EEV including a housing, an iron core, a reset spring, a coil assembly, an armature assembly and a valve body defining a first channel and a second channel. A valve seat is provided in the second channel. The electromagnetic EEV further includes at least one throttling channel.

The iron core, the reset spring and the armature assembly are disposed in the housing sequentially from the top downwards, and the reset spring abuts, at opposite ends thereof, against the iron core and the armature assembly.

The coil assembly is disposed over the housing, and when it is not energized, the iron core, the armature assembly and the housing together form an accommodating cavity.

The throttling channel is in communication with the first channel and the accommodating cavity.

The armature assembly is movably coupled to the valve seat.

Optionally, the armature assembly may have an outer diameter less than an inner diameter of the housing, and the throttling channel may be defined between an outer side of the armature assembly and an inner side of the housing.

Optionally, a plurality of throttling channels may be defined in the armature assembly in rotational symmetry about an axis of the armature assembly.

Optionally, each of the throttling channels may include a throttling bore, which extends through a body of the armature assembly from the top downwards and has a constant diameter.

Optionally, each of the throttling channels may include a throttling bore, which extends through a body of the armature assembly from the top downwards and has a varying diameter, wherein each throttling bore includes a vertically upper first throttling-bore section and a vertically lower second throttling-bore section joined to the first throttling-bore section, the first throttling-bore section having a smaller cross-sectional area than the second throttling-bore section.

Optionally, each of the throttling channels may assume one of a cylindrical shape and a cuboid shape.

Optionally, the armature assembly may further include a reset-spring receptacle, which does not intersect any of the throttling channels.

Optionally, each of the throttling channels may include a groove formed in an outer surface of the armature assembly, wherein the grooves are in rotational symmetry about the axis of the armature assembly.

Optionally, the throttling channel may have a length at a ratio greater than 0.2 to a diameter of an equivalent circle of the same area as a top portion of the throttling channel.

Optionally, the throttling channel and the armature assembly may satisfy

$$30 < S_1/S_2 < 150,$$

where $S_2$ represents an aggregate area of the throttling channel interfacing with the accommodating cavity, and $S_1$ represents an area of the armature assembly interfacing with the accommodating cavity.

To the above end, the present invention also provides a thermal management system including the electromagnetic EEV as defined in any of the preceding paragraphs.

To the above end, the present invention also provides vehicle including the thermal management system as defined above.

Compared with the prior art, the electromagnetic EEV, thermal management system and vehicle of the present invention offer the benefits as follows:

The electromagnetic EEV includes a housing, an iron core, a reset spring, a coil assembly, an armature assembly and a valve body defining a first channel and a second channel. A valve seat is provided in the second channel. The electromagnetic EEV further includes at least one throttling channel. The iron core, the reset spring and the armature assembly are disposed in the housing sequentially from the top downwards, and the reset spring abuts, at opposite ends thereof, against the iron core and the armature assembly. The coil assembly is disposed over the housing, and when it is not energized, the iron core, the armature assembly and the housing together form an accommodating cavity. The throttling channel is in communication with the first channel and the accommodating cavity, and the armature assembly is movably coupled to the valve seat. With this arrangement, in the electromagnetic EEV of the present invention, when the coil assembly disposed over the housing is energized, a magnetic field encompassing the armature assembly will be created, exerting an electromagnetic force on the armature assembly in the housing. As a result, the armature assembly is driven to move upwards, compressing the reset spring. The armature assembly rises until it comes into contact with the iron core. When the coil assembly is no longer energized, the magnetic field will disappear, and hence the upward electromagnetic force on the armature assembly. Consequently, the reset spring stretches and lowers the armature assembly, and a pressure in the accommodating cavity drops below a pressure around the valve seat. Since the throttling channel communicates with the accommodating cavity and the first channel, a refrigerant from the first channel will flow upwards through the throttling channel into the accommodating cavity. Due to a small diameter of the throttling channel, the refrigerant is pressurized and flows as a liquid in the throttling channel. Upon entering the accommodating cavity from the throttling channel, the refrigerant will experience a pressure drop and expend into a gas due to sudden loss of volumetric restriction. This is also accompanied by a sharp decrease in temperature of the refrigerant due to the physical and chemical properties thereof. As a consequence, the temperature of the whole accommodating cavity decreases, and the cold is transmitted by the housing to the coil assembly surrounding the housing, removing heat generated by the coil assembly and overall cooling the driving components of the electromagnetic EEV. The next cycle of operation starts with the coil assembly being again energized, creating an electromagnetic force which raises the armature assembly. The refrigerant in the accommodating cavity that has extracted heat from the surrounding of the housing is squeezed out through the throttling channel to the vicinity of the valve seat. At this point, the valve seat is in an open state, so the refrigerant directly flows into the second channel through the valve seat and carries the heat away. While the armature assembly is moving upwards, the volume of the accommodating cavity gets smaller and smaller, continually raising the pressure therein. As a result, the refrigerant in the accommodating cavity experiences a rise in saturation temperature and a degree of supercooling, which causes continued gas-to-liquid transformation. As the proportion of the liquid phase increases, the refrigerant, as a whole, becomes increasingly viscous and provides increasingly stronger hydraulic damping. This slows down the movement of the armature assembly towards the upper limit (where it comes into contact with the iron core), thereby reducing mechanical wear and noise of the armature assembly and the iron core arising from their collisions during operation. Therefore, the electromagnetic EEV of the present invention has an extended service life and consumes less power because the temperature of the coil assembly surrounding the housing can be reduced. Moreover, since the armature assembly collides with the iron core at a slower speed, their wear and noise during operation are reduced, improving the durability and stability of the electromagnetic EEV. This lays a good foundation for extending the service life of related vehicle components, such as batteries and motors.

The thermal management system and vehicle of the present invention are based on the same inventive concept as the electromagnetic EEV of the present invention. Therefore, they offer at least the same benefits as the electromagnetic EEV and, therefore, need not be described in further detail herein.

**BRIEF DESCRIPTION OF THE DRAWINGS**

Fig. 1 is a schematic diagram showing the structure of a simple refrigeration cycle according to the prior art.
Fig. 2 is a schematic diagram showing the structure of an electromagnetic electronic expansion valve (EEV) according to the prior art.
Fig. 3 shows the structure of an electromagnetic EEV according to an embodiment of the present invention.
Fig. 4 schematically illustrates an armature assembly according to an embodiment of the present invention, which is moving downwards.
Fig. 5 is a schematic partial view of an accommodating cavity and a throttling channel during downward movement of an armature assembly according to an embodiment of the present invention.
Fig. 6 schematically illustrates an armature assembly according to an embodiment of the present invention, which is moving upwards.
Fig. 7 shows Arrangement I of an armature assembly and a throttling channel according to an embodiment of the present invention.

Fig. 8 shows Arrangement II of an armature assembly and a throttling channel according to an embodiment of the present invention.
Fig. 9 shows Arrangement III of an armature assembly and a throttling channel according to an embodiment of the present invention.
Fig. 10 shows Arrangement IV of an armature assembly and a throttling channel according to an embodiment of the present invention.
Fig. 11 shows a top view of an armature assembly according to an embodiment of the present invention.

List of Reference Numerals

100 compressor; 101 egasator; 102 expansion valve; 103 condenser; 200 housing; 201 accommodating cavity; 300 iron core; 400 reset spring; 401 reset-spring receptacle; 500 armature assembly; 501 throttling channel; 502 first throttling-bore section; 503 second throttling-bore section; 504 throttling bore; 600 valve body; 601 first channel; 602 second channel; 603 valve seat; 604 valve plug; 700 armature; 800 coil assembly; 900 coil pin.

**DETAILED DESCRIPTION**

Specific embodiments of the present invention will be described in greater detail below with reference to the accompanying drawings. From the following description, advantages and features of the present invention will become more apparent. Note that the figures are provided in a very simplified form not necessarily drawn to exact scale for the only purpose of helping to explain the disclosed embodiments in a more convenient and clearer way. It will be understood that the figures may not necessarily illustrate the structures described herein to scale and that illustrative features depicted in the figures to explain certain principles of the present invention may be slightly simplified. The specific design features of the invention as disclosed herein, including, for example, specific dimensions, orientations, locations and shapes, will be determined in part by the particular intended application and use environment. Additionally, in the embodiments described below, like reference numerals may be sometimes used to refer to the same or functionally similar elements throughout different figures, while description thereof may not be repeated. In this specification, similar reference numerals and letters refer to similar items in the figures, and thus once an item is defined in one figure, it may not be discussed for following figures.

**EXAMPLE 1**

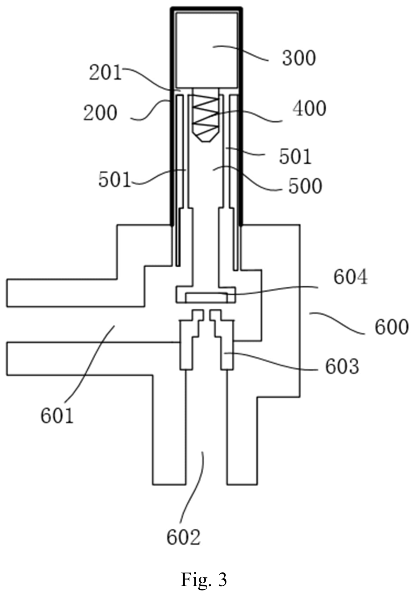

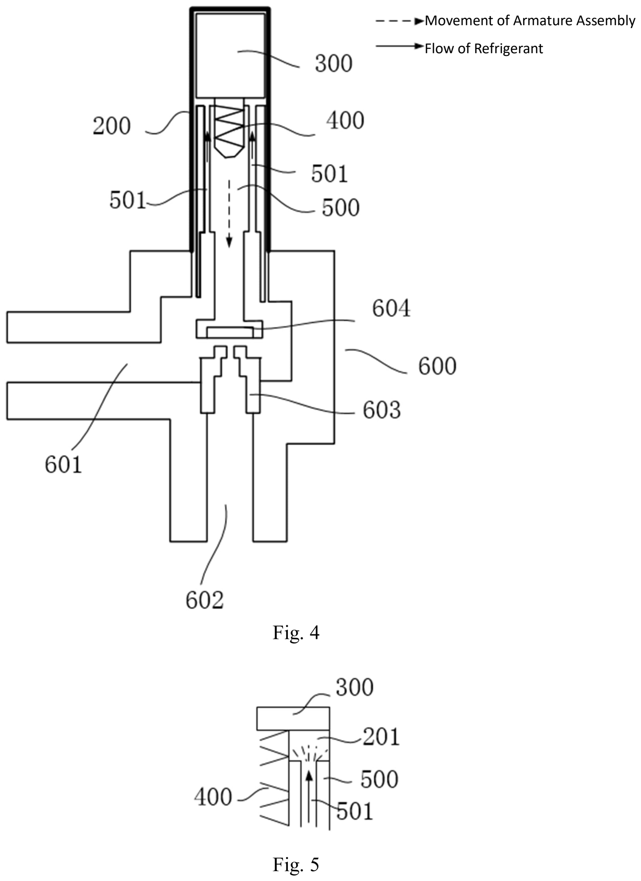

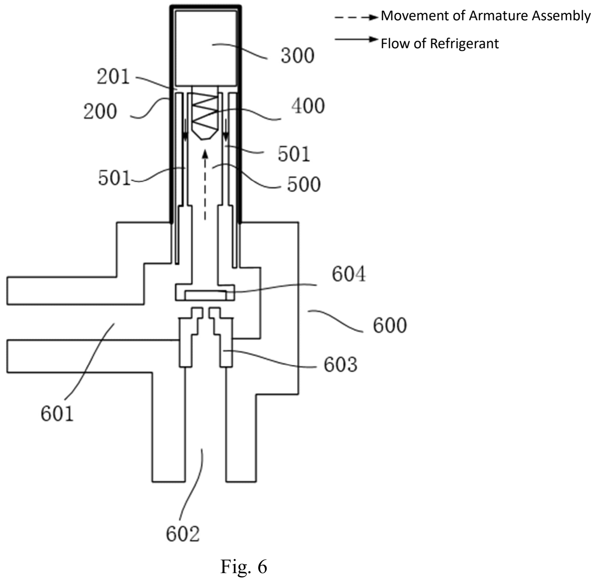

In one embodiment of the present invention, there is provided an electromagnetic electronic expansion valve (EEV). Particular reference is now made to Figs. 3 to 6. Fig. 3 is a schematic diagram showing the structure of the electromagnetic EEV (where an electromagnetic coil is not labeled). Fig. 4 schematically illustrates an armature assembly, which is moving downwards (where the electromagnetic coil is also not labeled). Fig. 5 is a schematic partial view showing the armature assembly, which is moving downwards. Fig. 6 schematically illustrates the armature assembly, which is moving upwards (where the electromagnetic coil is also not labeled). As can be seen from Figs. 3 to 6, the electromagnetic EEV includes a housing 200, an iron core 300, a reset spring 400, a coil assembly 800, an armature assembly 500 and a valve body 600 defining a first channel 601 and a second channel 602. A valve seat 603 is provided in the second channel 602. The electromagnetic EEV further defines at least one throttling channel 501. The iron core 300, the reset spring 400 and the armature assembly 500 are disposed sequentially from the top downwards in the housing 200 so that the reset spring 400 abuts, at opposite ends thereof, against the iron core 300 and the armature assembly 500. The coil assembly 800 is disposed over the housing 200. When the coil assembly 800 is not energized, the iron core 300, the armature assembly 500 and the housing 200 together form an accommodating cavity 201. The throttling channel 501 is in communication with the first channel 601 and the accommodating cavity 201, and the armature assembly 500 is movably coupled to the valve seat 603.

With this arrangement, in the electromagnetic EEV of the present invention, the coil assembly 800 is disposed over the housing 200, when the coil assembly 800 is energized, a magnetic field encompassing the armature assembly 500 will be created, exerting an electromagnetic force on the armature assembly 500 in the housing 200. As a result, the armature assembly 500 is driven to move upwards, compressing the reset spring 400. The armature assembly 500 rises until it comes into contact with the iron core 300. When the coil assembly 800 is no longer energized, the magnetic field will disappear, and hence the upward electromagnetic force on the armature assembly 500. Consequently, the reset spring 400 stretches and lowers the armature assembly 500, and a pressure in the accommodating cavity 201 drops below a pressure around the valve seat 603. Since the throttling channel 501 communicates with the accommodating cavity 201 and the first channel 601, a refrigerant from the first channel 601 will flow upwards through the throttling channel 501 into the accommodating cavity 201. Due to a small diameter of the throttling channel 501, the refrigerant is pressurized and flows as a liquid in the throttling channel 501. Upon entering the accommodating cavity 201 from the throttling channel 501, the refrigerant will experience a pressure drop and expend into a gas due to sudden loss of volumetric restriction. This is also accompanied by a sharp decrease in temperature of the refrigerant due to the physical and chemical properties thereof. As a consequence, the temperature of the whole accommodating cavity 201 decreases, and the cold is transmitted by the housing 200 to the coil assembly 800 surrounding the housing 200, removing heat generated by the coil assembly 800 and overall cooling the driving components of the electromagnetic EEV. The next cycle of operation starts with the coil assembly 800 being again energized, creating an electromagnetic force which raises the armature assembly 500. The refrigerant in the accommodating cavity 201 that has extracted heat from the surrounding of the housing 200 is squeezed out through the throttling channel 501 to the vicinity of the valve seat 603. At this point, the valve seat 603 is in an open state, so the refrigerant directly flows into the second channel 602 through the valve seat 603 and carries the heat away. While the armature assembly 500 is moving upwards, the volume of the accommodating cavity 201 gets smaller and smaller, continually raising the pressure therein. As a result, the refrigerant in the accommodating cavity 201 experiences a rise in saturation temperature and a degree of supercooling, which causes continued gas-to-liquid transformation. As the proportion of the liquid phase increases, the refrigerant, as a whole, becomes increasingly viscous and provides increasingly stronger hydraulic damping. This slows down the movement of the armature assembly 500 towards the upper limit (where it comes into contact with the iron core 300), thereby reducing mechanical wear and noise of the armature assembly 500 and the iron core 300 arising from their collisions during operation. Therefore, the electromagnetic EEV of the present invention has an extended service life and consumes less power because the temperature of the coil assembly 800 surrounding the housing 200 can be reduced. Moreover, since the armature assembly 500 collides with the iron core 300 at a slower speed, the wear and noise during operation of the armature assembly 500 and the iron core 300 are reduced, improving the durability and stability of the electromagnetic EEV. This lays a good foundation for extending the service life of related vehicle components, such as batteries and motors.

In one preferred implementation, the armature assembly 500 has an outer diameter less than an inner diameter of the housing 200, and the throttling channel 501 is defined by an outer side of the armature assembly 500 and an inner side of the housing 200. With this arrangement, in the electromagnetic EEV of the present invention, the throttling channel 501 is provided between the outer side of the armature assembly 500 and the inner side of the housing 200 simply by designing them so that the outer diameter of the former is less than the inner diameter of the latter, instead of by a bore or slot formed in the armature assembly 500, allowing the armature assembly 500 to have a simpler structure.

Preferably, the throttling channel 501 is defined in the armature assembly 500. There may be a plurality of throttling channels 501 in rotational symmetry about an axis of the armature assembly 500. Each of the throttling channels 501 may define a throttling bore 504 extending through a body of the armature assembly from the top downwards and having a constant diameter. With this arrangement, in the pulsed expansion valve of this embodiment, the plurality of throttling channels 501 in rotational symmetry about the axis of the armature assembly 500 ensure that the refrigerant flows into the throttling channel 501 in equal aliquots, allowing for even cooling of the driving components of the electromagnetic EEV and avoiding them from damage that may otherwise arise from uneven cooling.

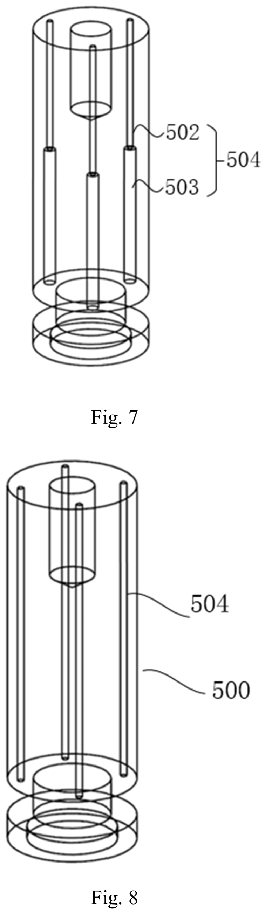

Reference is now made to Fig. 7, a schematic diagram of an arrangement of the armature assembly and the throttling channels (Arrangement I). As can be seen from Fig. 7, in one preferred implementation, each throttling channel includes a throttling bore 504 extending through the body of the armature assembly from the top downwards and having a varying diameter. The throttling bore 504 includes a vertically upper first throttling-bore section 502 and a vertically lower second throttling-bore section 503. The first throttling-bore section 502 is joined to, and has a smaller cross-sectional area than, the second throttling-bore section 503. This arrangement ensures that the refrigerant from the first channel 601 flows successively through the second throttling-bore sections 503 and the first throttling-bore sections 502 while experiencing gradual pressure rises during the flow through the throttling bores 504, which transform the refrigerant to the liquid phase within the throttling bores 504. In addition, when entering the accommodating cavity 201 from the second throttling-bore sections 503, the refrigerant will expend into a gas due to sudden loss of volumetric restriction, thereby overall cooling the driving components of the electromagnetic EEV.

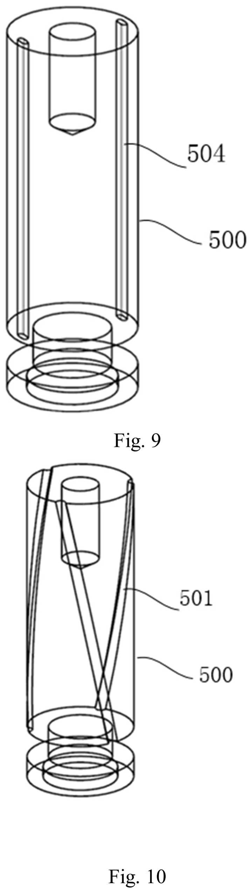

Reference is now made to Figs. 8 to 9, Fig. 8 is a schematic diagram of an alternative arrangement of the armature assembly and the throttling channels (Arrangement II), and Fig. 9 is a schematic diagram of another alternative arrangement of the armature assembly and the throttling channels (Arrangement III). As can be seen from Figs. 8 to 9, in preferred implementations, the throttling bores 504 assume one of a cylindrical shape and a cuboid shape. Those skilled in the art would appreciate that the cylindrical and cuboid shapes of the throttling bores represent only preferred implementations of the present invention and that other shapes are also possible within the scope of the present invention, including, but not limited to, obloid, ovocylindrical and triangular prismatic. These shapes are not described in further detail herein for the sake of brevity.

Reference is now made to Fig. 10, Fig. 10 is a schematic diagram of yet another alternative arrangement of the armature assembly and the throttling channels (Arrangement IV). As can be seen from Fig. 10, in one preferred implementation, each throttling channel 501 includes a groove formed in an outer surface of the armature assembly, and all these grooves are in rotational symmetry about the axis of the armature assembly 500. The grooves formed in this implementation as the throttling channels 501 of the electromagnetic EEV provide at least the same effects as the foregoing implementations and, therefore, need not be described in further detail herein.

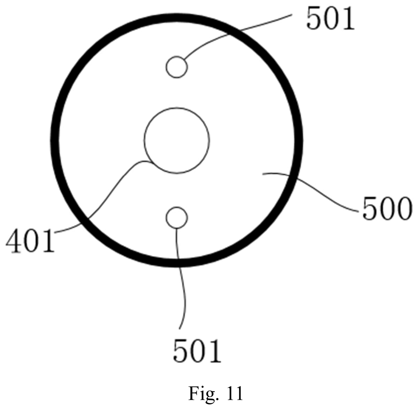

Reference is now made to Fig. 11, Fig. 11 is a schematic top view of the armature assembly. As can be seen from Fig. 11, the armature assembly 500 further includes a reset-spring receptacle 401, which does not intersect any of the throttling channels 501. The reset spring 400 is inserted in the reset-spring receptacle 401 so as to abut against the armature assembly 500. With this arrangement, in the electromagnetic EEV of this embodiment, since the reset-spring receptacle 401 is designed so as not to intersect any of the throttling channels 501, when the reset spring 400 is brought into abutment with the iron core 300 and the armature assembly 500, its presence will not exert any adverse impact on the arrangement of the throttling channels 501, or on flow of the refrigerant.

In one preferred implementation, each throttling channel has a length at a ratio greater than 0.2 to a diameter of an equivalent circle of the same area as a top portion of the throttling channel. This ensures that the refrigerant flows a sufficiently long distance in the throttling bore 504, which enables the refrigerant to transform to the liquid phase within the throttling bore 504 and to expand into a gas when entering the accommodating cavity 201, allowing for overall cooling of the driving components of the electromagnetic EEV.

Preferably, the throttling channel 501 and the armature assembly 500 satisfy:

$$30 < S_1/S_2 < 150,$$

where $S_2$ represents an aggregate area of the throttling channel 501 interfacing with the accommodating cavity 201, and $S_1$ represents an area of the armature assembly 500 interfacing with the accommodating cavity 201. With this arrangement, it is ensured that the refrigerant provides a throttling effect when it leaves a top portion of the throttling channel 501 and expands into a gas when entering the accommodating cavity 201 due to sudden loss of volumetric restriction, allowing for overall cooling of the driving components of the electromagnetic EEV.

Preferably, the coil assembly 800 includes an electromagnetic coil and a coil pin. The electromagnetic coil is disposed over the housing 200, and the coil pin is arranged on top of the electromagnetic coil and configured to receive a voltage signal for energizing the electromagnetic coil. The bottom of the armature assembly 500 further includes a valve plug 604, and the armature assembly 500 is movably coupled to the valve seat 603 through the valve plug 604. With this arrangement, the coil pin can receive a voltage signal from a controller, which energizes the electromagnetic coil to cause it to produce a magnetic field. Under the action of the magnetic field, which encompasses the armature assembly 500, an electromagnetic force will be exerted on the armature assembly 500 to cause it to move upwards, as required by refrigeration cycles involving the electromagnetic EEV.

## EXAMPLE 2

In one embodiment, there is provided a thermal management system including the electromagnetic EEV according to the foregoing embodiment.

With this arrangement, through employing the electromagnetic EEV, the thermal management system can not only speed up response of the thermal management system and increase its control accuracy, but can also reduce noise generated during operation thereof.

## EXAMPLE 3

In one embodiment, there is provided a vehicle including the thermal management system as defined above.

Since the thermal management system provides faster response and better control accuracy, through employing this thermal management system, the service life of batteries, motors and other components of the vehicle can be extended.

Further, the various functional modules in the embodiments described herein may be integrated into a discrete component, or provided as separate modules. Alternatively, two or more such modules may be integrated into a discrete component. Further, it should be noted that, as used herein, the terms "first", "second", "third" and the like are only meant to distinguish various components, elements, steps, etc. from each other, and are not intended to indicate logical or sequential orderings thereof, unless otherwise indicated or specified.

As used herein, unless otherwise clearly specified or defined, when a first feature is described as being "above" or "below" a second feature, it may be either in direct contact with the second feature, or in indirect contact with one or more intervening media being present therebetween. When a first feature is referred to as being "on", "above" or "on top of" a second feature, it may be right or obliquely on, above or on top of the second feature, or simply located at a higher level than the second feature. When a first feature is referred to as being "under", "below" or "at bottom of" a second feature, it may be right or obliquely under, below or at bottom of the second feature, or simply located at a lower level than the second feature.

Reference throughout this specification to "one embodiment", "some embodiments", "an example", "a specific example" "some examples" or the like means that a particular feature, structure, material, or characteristic described in connection with the embodiments or examples is included in at least one embodiment or example of the invention. Thus, the appearances of those phrases in various places throughout this specification are not necessarily referring to the same embodiment or example of the invention.

In summary, in the electromagnetic EEV of the present invention, when the coil assembly 800 disposed over the housing 200 is energized, a magnetic field encompassing the armature assembly 500 will be created, exerting an electromagnetic force on the armature assembly 500 in the housing 200. As a result, the armature assembly 500 is driven to move upwards, compressing the reset spring 400. The armature assembly 500 rises until it comes into contact with the iron core 300. When the coil assembly 800 is no longer energized, the magnetic field will disappear, and hence the upward electromagnetic force on the armature assembly 500. Consequently, the reset spring 400 stretches and lowers the armature assembly 500, and a pressure in the accommodating cavity 201 drops below a pressure around the valve seat 603. Since the throttling channel 501 communicates with the accommodating cavity 201 and the first channel 601, the refrigerant from the first channel 601 will flow upwards through the throttling channel 501 into the accommodating cavity 201. Due to a small diameter of the throttling channel 501, the refrigerant is pressurized and flows as a liquid in the throttling channel 501. Upon entering the accommodating cavity 201 from the throttling channel 501, the refrigerant will experience a pressure drop and expend into a gas due to sudden loss of volumetric restriction. This is also accompanied by a sharp decrease in temperature of the refrigerant due to the physical and chemical properties thereof. As a consequence, the temperature of the whole accommodating cavity 201 decreases, and the cold is transmitted by the housing 200 to the coil assembly 800 surrounding the housing 200, removing heat generated by the coil assembly 800 and overall cooling the driving components of the electromagnetic EEV. The next cycle of operation starts with the coil assembly 800 being again energized, creating an electromagnetic force which raises the armature assembly 500. The refrigerant in the accommodating cavity 201 that has extracted heat from the surrounding of the housing 200 is squeezed out through the throttling channel 501 to the vicinity of the valve seat 603. At this point, the valve seat 603 is in an open state, so the refrigerant directly flows into the second channel 602 through the valve seat 603 and carries the heat away. While the armature assembly 500 is moving upwards, the volume of the accommodating cavity 201 gets smaller and smaller, continually raising the pressure therein. As a result, the refrigerant in the accommodating cavity 201 experiences a rise in saturation temperature and a degree of supercooling, which causes continued gas-to-liquid transformation. As the proportion of the liquid phase increases, the refrigerant, as a whole, becomes increasingly viscous and provides increasingly stronger hydraulic damping. This slows down the movement of the armature assembly 500 towards the upper limit (where it comes into contact with the iron core 300), thereby reducing mechanical wear and noise of the armature assembly 500 and the iron core 300 arising from their collisions during operation. Therefore, the electromagnetic EEV of the present invention has an extended service life and consumes less power because the temperature of the coil assembly 800 surrounding the housing 200 can be reduced. Moreover, since the armature assembly 500 collides with the iron core 300 at a slower speed, their wear and noise during operation are reduced, improving the durability and stability of the electromagnetic EEV. This lays a good foundation for extending the service life of related vehicle components, such as batteries and motors.

The thermal management system and vehicle of the present invention are based on the same inventive concept as the electromagnetic EEV of the present invention. Therefore, they offer at least the same benefits as the electromagnetic EEV and, therefore, need not be described in further detail herein.

Presented above are merely a few preferred embodiments of the present invention, which do not limit the invention in any way. Changes in any forms made to the principles and teachings disclosed herein, including equivalents and modifications, by any person of ordinary skill in the art without departing from the scope of the invention are intended to fall within the scope of the invention.

## Claims

1. An electromagnetic electronic expansion valve (EEV), comprising a housing, an iron core, a reset spring, a coil assembly, an armature assembly and a valve body defining a first channel and a second channel, the second channel provided therein with a valve seat, the electromagnetic EEV further comprising at least one throttling channel,

   wherein the iron core, the reset spring and the armature assembly are disposed in the housing sequentially from the top downwards, and opposite ends of the reset spring respectively abut against the iron core and the armature assembly;
   the coil assembly is sleeved on an outer side of the housing, and when the coil assembly is not energized, the iron core, the armature assembly and the housing together form an accommodating cavity;
   the throttling channel is in communication with the first channel and the accommodating cavity; and
   the armature assembly is movably connected to the valve seat.

2. The electromagnetic EEV of claim 1, wherein the armature assembly has an outer diameter less than an inner diameter of the housing, and wherein the throttling channel is defined between an outer side of the armature assembly and an inner side of the housing.

3. The electromagnetic EEV of claim 1, wherein a plurality of throttling channels are defined in the armature assembly, and wherein the plurality of throttling channels are in rotational symmetry about an axis of the armature assembly.

4. The electromagnetic EEV of claim 3, wherein each of the throttling channels comprises a throttling bore, which extends through a body of the armature assembly from the top downwards and has a constant diameter.

5. The electromagnetic EEV of claim 3, wherein each of the throttling channels comprises a throttling bore, which extends through a body of the armature assembly from the top downwards and has a varying diameter, wherein each throttling bore comprises a vertically upper first throttling-bore section and a vertically lower second throttling-bore section joined to the first throttling-bore section, the first throttling-bore section having a smaller cross-sectional area than the second throttling-bore section.

6. The electromagnetic EEV of claim 4 or 5, wherein each of the throttling channels assumes one of a cylindrical shape and a cuboid shape.

7. The electromagnetic EEV of claim 3, wherein the armature assembly further comprises a reset-spring receptacle, which does not intersect any of the throttling channels.

8. The electromagnetic EEV of claim 3, wherein each of the throttling channels comprises a groove formed in an outer surface of the armature assembly, wherein the grooves are in rotational symmetry about the axis of the armature assembly.

9. The electromagnetic EEV of claim 1, wherein the throttling channel has a length at a ratio greater than 0.2 to a diameter of an equivalent circle of the same area as a top portion of the throttling channel.

10. The electromagnetic EEV of claim 1, wherein the throttling channel and the armature assembly satisfy

$$30 < S_1/S_2 < 150,$$

where $S_2$ represents an aggregate area of the throttling channel interfacing with the accommodating cavity, and $S_1$ represents an area of the armature assembly interfacing with the accommodating cavity.

**11.** A thermal management system, comprising the electromagnetic EEV of any one of claim 1 to 10.

**12.** A vehicle, comprising the thermal management system of claim 11.

Fig. 1

Fig. 2

Fig. 3

- - - ▶ Movement of Armature Assembly
——— ▶ Flow of Refrigerant

300

200

400

501

501

500

604

600

603

601

602

Fig. 4

300

201

400

500

501

Fig. 5

EP 4 644 746 A1

- - - → Movement of Armature Assembly

→ Flow of Refrigerant

Fig. 6

14

502
503
504

Fig. 7

504

500

Fig. 8

Fig. 9

Fig. 10

Fig. 11

## INTERNATIONAL SEARCH REPORT

| International application No. |
| --- |
| **PCT/CN2023/136352** |

| A. | CLASSIFICATION OF SUBJECT MATTER |
| --- | --- |

F16K31/06(2006.01)i; F16K1/32(2006.01)i; F16K1/36(2006.01)i; F16K47/02(2006.01)i; F16K47/08(2006.01)i

According to International Patent Classification (IPC) or to both national classification and IPC

| B. | FIELDS SEARCHED |
| --- | --- |

Minimum documentation searched (classification system followed by classification symbols)

IPC: F16K

Documentation searched other than minimum documentation to the extent that such documents are included in the fields searched

Electronic data base consulted during the international search (name of data base and, where practicable, search terms used)

CNTXT, WPABS, DWPI, ENTXTC, CNKI: 半径, 大小, 弹簧, 弹性, 发热, 阀, 降低温度, 降温, 节流, 节流阀, 节流孔, 节流通道, 节流通路, 孔, 孔径, 冷却, 面积, 膨胀, 膨胀阀, 绕组, 铁芯, 通道, 通路, 温度升高, 衔铁, 线圈, 芯铁, 直径, 阻尼, valve, spring, armature, winding, coil, path, channel, aperture, hole, throttle, expansion, cool, temperature, iron core, room

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116164154 A (UNITED AUTOMOTIVE ELECTRONIC SYSTEMS CO., LTD.) 26 May 2023 (2023-05-26)<br>claims 1-12 | 1-12 |
| Y | CN 217482102 U (BORGWARNER AUTOMOTIVE COMPONENTS (NINGBO) CO., LTD.) 23 September 2022 (2022-09-23)<br>description, paragraphs 4-40, and figures 1-5 | 1-12 |
| Y | JP 2001153498 A (TGK CO., LTD.) 08 June 2001 (2001-06-08)<br>description, paragraphs 5-19, and figures 1-2 | 1-12 |
| A | CN 112539293 A (GUIZHOU MANGEWEI FLUID INTELLIGENT TECHNOLOGY CO., LTD.) 23 March 2021 (2021-03-23)<br>entire document | 1-12 |
| A | CN 114607543 A (HARBIN ENGINEERING UNIVERSITY) 10 June 2022 (2022-06-10)<br>entire document | 1-12 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 February 2024** | **28 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/136352** |

### C. DOCUMENTS CONSIDERED TO BE RELEVANT

| Category* | Citation of document, with indication, where appropriate, of the relevant passages | Relevant to claim No. |
| --- | --- | --- |
| A | CN 202254535 U (ZHEJIANG DUN'AN ARTIFICIAL ENVIRONMENT CO., LTD.) 30 May 2012 (2012-05-30)<br>entire document | 1-12 |
| A | CN 108253157 A (BYD CO., LTD.) 06 July 2018 (2018-07-06)<br>entire document | 1-12 |
| A | CN 101520107 A (ZHEJIANG SANHUA CO., LTD.) 02 September 2009 (2009-09-02)<br>entire document | 1-12 |
| A | CN 212839420 U (ZHEJIANG YIDA AUTOMOBILE COMPONENTS CO., LTD.) 30 March 2021 (2021-03-30)<br>entire document | 1-12 |
| A | WO 2018007074 A1 (DYNAMIC E FLOW GMBH) 11 January 2018 (2018-01-11)<br>entire document | 1-12 |

Form PCT/ISA/210 (second sheet) (July 2022)

**INTERNATIONAL SEARCH REPORT**
Information on patent family members

International application No.

**PCT/CN2023/136352**

| Patent document cited in search report | | | Publication date (day/month/year) | Patent family member(s) | | | Publication date (day/month/year) |
|---|---|---|---|---|---|---|---|
| CN | 116164154 | A | 26 May 2023 | None | | | |
| CN | 217482102 | U | 23 September 2022 | None | | | |
| JP | 2001153498 | A | 08 June 2001 | None | | | |
| CN | 112539293 | A | 23 March 2021 | None | | | |
| CN | 114607543 | A | 10 June 2022 | CN | 114607543 | B | 13 December 2022 |
| CN | 202254535 | U | 30 May 2012 | None | | | |
| CN | 108253157 | A | 06 July 2018 | WO | 2018121412 | A1 | 05 July 2018 |
| | | | | CN | 108253157 | B | 22 May 2020 |
| CN | 101520107 | A | 02 September 2009 | CN | 101520107 | B | 11 April 2012 |
| CN | 212839420 | U | 30 March 2021 | None | | | |
| WO | 2018007074 | A1 | 11 January 2018 | EP | 3482403 | A1 | 15 May 2019 |
| | | | | DE | 102016112246 | A1 | 11 January 2018 |
| | | | | DE | 102016112246 | B4 | 21 November 2019 |

Form PCT/ISA/210 (patent family annex) (July 2022)